# EUROPEAN PATENT SPECIFICATION

(11) **EP 1 078 306 B1**
(45) Date of publication and mention of the grant of the patent: **13.08.2003**
(21) Application number: 99921129.5
(22) Date of filing: 07.05.1999
(51) Int. Cl.: G05B 19/4099

(54) **PROCESS AND APPARATUS FOR CREATING SEQUENCES FOR NUMERICALLY CONTROLLED MACHINE TOOLS**
VERFAHREN UND VORRICHTUNG ZUR SEQUENZEN-ERSTELLUNG FÜR NUMERISCH GESTEUERTE MASCHINENWERKZEUGE
PROCEDE ET DISPOSITIF SERVANT A CREER DES SEQUENCES POUR DES MACHINES-OUTILS A COMMANDE NUMERIQUE

(30) Priority: 22.05.1998 IT TO980437
(43) Date of publication of application: 28.02.2001
(73) Proprietor: FIDIA S.P.A., 10099 San Mauro Torinese (Torino) (IT)
(72) Inventor: MORFINO, Giuseppe, I-10025 Pino Torinese (IT)
(74) Representative: Garavelli, Paolo
(86) International application number: IT9900120
(87) International publication number: WO99061963

(56) References cited:
- WO-A-93/09482
- IOANNIDES M ET AL: "VOM MODELL ZUM FERTIGTEIL" VDI Z, vol. 136, no. 5, 1 May 1994 (1994-05-01), pages 66-68, 71, XP000449783 ISSN: 0042-1766
- HOFMANN A: "CAD/CAM-EINSATZ BEI EINEM WERKZEUG-, FORMEN- UND MODELLBAUER FUR DIE AUTOMOBILINDUSTRIE" WERKSTATT UND BETRIEB, vol. 122, no. 6, 1 June 1989 (1989-06-01), page CA93/CA94, CA96, C XP000046763 ISSN: 0043-2792
- "VOM DESIGN ZUM PROTOTYPEN;PROGRAMMIERSYSTEM UNTER WINDOWS" ZWF ZEITSCHRIFT FUER WIRTSCHAFTLICHEN FABRIKBETRIEB, vol. 91, no. 5, 1 May 1996 (1996-05-01), page 236 XP000587778 ISSN: 0932-0482
- NANN R ET AL: "CAD-CAM-CAQ-INTEGRATION IM WERKZEUG- UND FORMENBAU" WERKSTATT UND BETRIEB, vol. 131, no. 1/02, 1 February 1998 (1998-02-01), pages 48-52, XP000748608 ISSN: 0043-2792
- WOLF A: "3D-CAD/CAM AUF HOHEM NIVEAU" FORM + WERKZEUG, no. 1, 1 March 1996 (1996-03-01), pages 50-54, XP000591243
- GARDAN Y ET AL: "AN END-USER ORIENTED APPROACH TO DESIGN MAN-MACHINE INTERFACES FOR CAD/CAM" PROCEEDINGS OF THE INTERNATIONAL CONFERENCE ON SYSTEMS, MAN AND CYBERNETICS, LE TOUQUET, OCT. 17 - 20, 1993, vol. 3, 17 October 1993 (1993-10-17), pages 525-530, XP000482017 INSTITUTE OF ELECTRICAL AND ELECTRONICS ENGINEERSISBN: 0-7803-0911-1

## Description

The present invention refers to a process and an apparatus for creating sequences of working directives for numerically controlled machine tools.

Processes of this type and apparata to realize them are known in the art. Ioannides M. et al, *Vom Modell zum Fertigteil*, VDI-Z, 1.5.94, pp. 66-68, discloses a process for creating high-level instructions for surface movements of tools, which instructions can be modified by an end user at workshop level. This document does not disclose the capability of modifying parameters for standard NC programs at end user level. Other prior art documents, namely WO-A-93 98482; Hofman, *CAD*/*CAM-Einsatz,* Werkstatt und Betrieb, 1.6.89, pp. CA93-94; and *Vom Design zum Prototypen; Programmiersystem under Windows,* ZWF, 1.5.96, p. 236, disclose processes and apparata for operating NC machine tools in which the end user cannot directly interact for modifying parameter values. So far, it was common practice that the working paths were created by the Computer Aided Manufacturing (CAM) designer operator and were transferred or transmitted to the workshop operator, that took care of putting them into practice. Should the final workpiece not be optimally obtained, the workshop operator had to confer with the CAM operator, that went on performing possible modifications to the created paths, in order to supply again the new paths to the workshop operator. A series of following recalibrations had therefore to be carried out, based on practical final results, and the number of such recalibrations could also be great

Therefore, these processes, with the outcome of an always increasing specialization in this field, began posing problems in medium-big-sized companies, also due to the trend of providing more responsibilities for a workshop operator, that has anyway such features and practical expertises as to allow him to effectively recalibrating the program based on the obtained results. Thereby, system were developed that allowed the workshop operator a more direct interaction with the machine-controlling programs, in order to improve the path directly "in the field". These systems, however, bring about organization and personnel problems, because in this case the CAM operator is the one that as a result is being deprived of part of his coordinator role, that in medium-big-sized companies is also a guarantee of compliance with the general guidelines developed by the company itself, due to the centralization of working orders for which generally CAM operators are responsible.

Object of the present invention is thereby solving the above prior art problems, providing a process and an apparatus that reduce realization costs of working paths for numerically controlled machine tools.

A further object of the present invention is optimizing the development of human resources potentialities applied to the above realization, on one hand increasing the responsabilization and therefore the satisfaction of workshop operators in these preparation steps, and on the other hand maintaining for CAM operators a general addressing function in preparing working orders.

The above and other objects and advantages of the invention, as will appear from the following description, are obtained with a process and an apparatus like those respectively disclosed in Claims 1 and 7. Preferred embodiments and non-trivial variations of the present invention are disclosed in the dependent Claims.

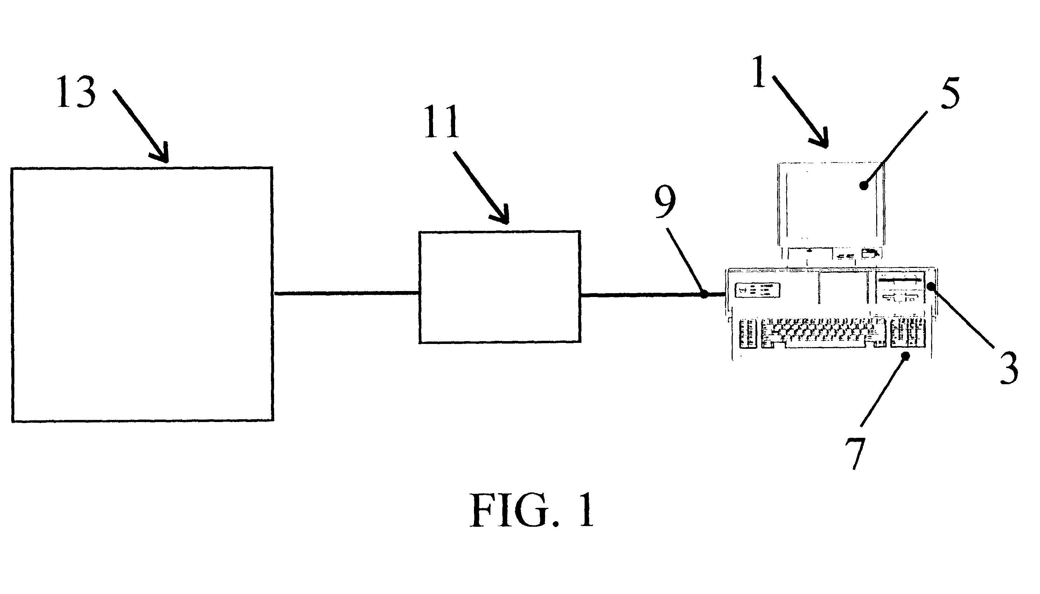

The present invention will be better described by some preferred embodiments thereof, provided as a non-limiting example, with reference to the enclosed Figure 1 of the drawings, that is a schematical block diagram of a preferred embodiment of a system that carries out the present invention.

With reference to Fig. 1, an embodiment of a system to carry out the invention comprises, as is well-kow in the art, a work-station 1, that can be commonly composed of a Central Processing Unit (CPU) 3, a video 5 and a keyboard 7. The work-station 1 is connected through lines 9 or equivalent means to a computerized numerically controlled unit 11, that can be also composed of a CPU with video and keyboard, which is in turn connected to a machine tool 13, for example a milling machine. The apparatus of the present invention is located partly into the work-station 1, for all aspects related to design and definition of working steps by a CAM operator, and partly into the computerized numerically controlled unit 11, for all aspects related to recalibration of parameters relating to working stages and to the generation and execution of tool paths associated therewith by a workshop operator.

In fact, due to the process and the apparatus of the present invention, it is possible on one hand to assign to the workshop operator that part of the recalibration work of the parameters, created by a CAM operator, that is simplified by his direct knowledges and practical experiences, and that allows saving the long, intermediate steps of the previous processes, and on the other hand to assign to the CAM operator the general preparation of working orders.

According to the invention, a process is provided with a series of steps, that are put into practice by a related apparatus suitable for this purpose: to simplify the description, therefore, only the apparatus of the present invention will be described, the process steps performed thereby being evident from its own composition.

Therefore, the apparatus for creating working paths for numerically controlled machine tools of the invention comprises, first of all, in a known way, means for reading a mathematical description of an object to be worked. These means are composed, for example, by a file written complying with one of the formats for describing mathematical surfaces, like IGES (Initial Graphics Exchange Specification) or VDA-FS (Verband der Automobilindustrie Flaechen Schnittstelle).

The apparatus further comprises means for computing the internal mathematical model of the object based on data obtained from the means for reading the mathematical description; these means comprise algorithms of a general and known type, suitable to approximate mathematical surfaces with adequate representations. In practice, this step could also be removed or anyway could be a lot different from one system to another.

Moreover, there are also means for preparing the working area for the object to be worked starting from the computed mathematical model, which means comprise general known algorithms for managing the operator interface that are adapted to allow defining the areas themselves by means of pointing devices (like mouses or graphic tablets), or inserting through a keyboard parameters and their related values suitable to describe the area.

Means are then provided for defining working parameters based on the object to be worked and on the prepared working area, which means comprise specific algorithms adapted to store into a text file a plurality of parameters and their related values defined by the operator for the current working. An example of the procedure being produced in this step, and being composed of a plurality of Commands and Parameters with their related values, is shown in Table I.

**Table I**

| Procedure Example |
|---|
| > ProjectOpen |
| FileName = D:\input\vda\TAPPO\ttap01.PRJ |
| |

| > RoughingTool |
|---|
| ToolDiam = 10.000000 |
| ToolRad = 0.000000 |
| ToolLen = 0.000000 |
| |

| > RoughingMachining |
|---|
| StartZ = 0.001000 |
| EndZ = -21.593000 |
| SecurityZ = 100.001000 |
| Stock = 1.000000 |
| Zdec = 1.000000 |
| ToolOn = 1 |
| Cooling = 0 |
| ApprFeed = 2000 |
| Spindle = 3000 |
| WorkFeed = 3500 |
| |

| > RoughingCompute |
|---|
| FileName = D:\input\vda\TAPPO\rou000.ISO |
| ToolCentre = 0 |

These means for defining working parameters translate working data and technologic data that were input by the operator into a plurality of parameters with related values: one of the novel aspects of such operation is that the values of such parameters are adapted to be modified by the end user, being stored into a file of parameters and values that is displayed on a screen under the form of windows that are adapted to be modified according to common methods in the art. For example, according to another possile variation that allows such modification, the file of parameters and values is displayed on the screen under the form of a program that is adapted to be directly modified by the user.

The inventive apparatus further comprises means for creating working paths based on the prepared working area and on the prepared working parameters; these means in a pratical embodiment comprise algorithms adapted to write a file containing a plurality of parameters and their related values into an ordered sequence in order to allow to a numeric control to interpret them and to consequently move the tool. The file is written into one of the formats that are commonly interpreted by numeric controls (for example ISO 6983), and an example of a tool path being generated is shown in Table II.

**Table II**

| ISO Part Program |
|---|
| N12G17Q1 |
| N13M03S3000 |
| N14G00Z100.001 |
| N15G00X-21.900Y24.021 |
| N16Z-0.999F2000 |
| N17Y16.828F3500 |
| N18X-16.364Y22.364 |
| N19G02X-12.846Y24.538T-10.000J16.000 |
| N20X-6.846Y26.538 |
| N21G02X-4.000Y27.000T-4.000J18.000 |
| N22X0.000 |
| N23X4.000 |
| N24G02X6.846Y26.538I4.000 |
| N25X12.846Y24.538 |

Finally, the apparatus comprises means for using, by the end user, the working paths being created to control the machine tool to realize the object, according to the common practice in the field. The means for using working parameters allow, in a novel way, a stage-by-stage usage by the end user, that is enabled to modify the parameter values in each one of the working stages according to the practical results that he wishes to obtain.

The flexibility of the apparatus of the present invention implies that all the above means for reading the mathematical description, for computing the model, for preparing the working area, for defining the working parameters and for creating the paths, translate and express their own control data into a plurality of parameters with related values that are adapted to be modified by the end user.

The apparatus of the invention allows dividing the tasks in a CAM environment into two different phases: in the first one, the CAM operator with specific design knowledges, by complying also with company directives, defines strategies and all parameters for generating tool paths; in the second phase, aboard the machine, the workshop operator receives what has been defined in the first phase and starts the process of generating the paths with their following operation on the numerically controlled machine, with the chance of intervening for a possible modification of the above parameters in order to better cope with the current working needs, for example by revising what has been defined, adding or removing some stages, etc.

## Claims

1. Process for creating sequences of working directives for numerically controlled machine tools, said process comprising the steps of:
- reading a mathematical description of an object to be worked;
- preparing a working area for said object from a pre-established mathematical model;
- defining working parameters based on the object to be worked and on the prepared working area;
- creating working paths based on said prepared working area and on said working parameters that have been created by the operator or modified by the end user; and
- using the machine tool control to control the machine tool depending on the working paths being created by the operator or being modified by the end user;
**characterised in that** said defining step further comprises the steps of:
• inserting by means of an operator working data and technologic data about the object to be realized;
• translating said working data and technologic data into a plurality of technologic parameters with related values, said parameters being all the technologic NC working parameters, said parameters with related values being stored into a file, said values of said parameters being adapted to be modified by an end user;
and **characterised in that** it comprises, after said defining step, the further step of possibly modifying, according to working needs and by interaction from the end user, said file of parameters with related values for all standard NC working programs, said possibly modifying step being carried out stage by stage for each working stage of said machine tool.

2. Process according to Claim 1, **characterized in that** it further comprises, after said reading step, the step of computing a mathematical model of said object based on data obtained from said step of reading the mathematical description, said preparing step then becoming the step of preparing a working area for said object from the computed mathematical model.

3. Process according to Claim 1 or 2, **characterized in that** said file of parameters and values is displayed on a screen under a form of a window adapted to be modified.

4. Process according to Claim 3, **characterized in that** said file of parameters and values is displayed on a screen under the form of a program adapted to be modified.

5. Process according to Claim 1 or 2, **characterized in that** all said steps of reading a mathematical description, optionally computing a model, preparing a working area, defining working parameters and creating paths are adapted to be translated and expressed into a plurality of parameters with related values adapted to be modified by an end user.

6. Process according to any of the previous Claims, **characterized in that** the end user is a workshop operator responsible for the workings on numerically controlled machine tools and the operator is a CAM operator.

7. Apparatus (1, 11) for creating sequences of working directives for numerically controlled machine tools (13), said apparatus comprising:
- means (1) for reading a mathematical description of an object to be worked;
- optional means for computing a mathematical model of said object based on data obtained from said means (1) for reading the mathematical description;
- means (1) for preparing a working area for said object from the computed mathematical model;
- means (1) for defining working parameters based on the object to be worked and on the prepared working area;
- means (11) for creating working paths based on said prepared working area and on said working parameters that have been created by the operator or modified by the end user; and
- a machine tool control (11) adapted to control the machine tool (13) depending on the working paths being created by the operator or being modified by the end user;
**characterised in that** said defining means (1) further comprise:
• means (1) for inserting by means of an operator working data and technologic data about the object to be realized;
• means (1) for translating said working data and technologic data into a plurality of parameters with related values, said parameters being all the technologic NC working parameters, said parameters with related values being stored into a file, said values of said parameters being adapted to be modified by an end user;
and **characterised in that** it further comprises means (11) for possibly modifying, according to working needs and by interaction from the end user, said file of parameters with related values for all standard NC working programs, said modifying means (11) being operated stage by stage for each working stage of said machine tool.

8. Apparatus (1, 11) according to Claim 7, **characterized in that** said file of parameters and values is displayed on a screen under the form of windows adapted to be modified.

9. Apparatus (1, 11) according to Claim 7, **characterized in that** said file of parameters and values is displayed on a screen under the form of a program adapted to be modified.

10. Apparatus (1, 11) according to Claim 7, **characterized in that** said means (1) for reading a mathematical description of an object to be worked comprise a file written in compliance with one of the formats for describing mathematical surfaces, like IGES or VDA.

11. Apparatus (1, 11) according to Claim 7, **characterized in that** said means (1) for computing the mathematical model of said object comprise algorithms of the general type suitable to approximate mathematical surfaces with equivalent geometric surfaces.

12. Apparatus (1, 11) according to Claim 7, **characterized in that** said means (1) for preparing the working area for said object from the computed mathematical model comprise general algorithms for managing the operator interface that are able to allow defining the areas themselves by means of pointing devices, or inserting through a keyboard parameters and related values suitable to describe said area.

13. Apparatus (1, 11) according to Claim 7, **characterized in that** said means (1) for defining working parameters based on the object to be worked comprise specific algorithms that are adapted to store into a text file a plurality of parameters and their related values defined by the operator for the current working.

14. Apparatus (1, 11) according to Claim 7, **characterized in that** said means (11) for creating working paths comprise algorithms that are adapted to write a file containing a plurality of parameters and their related values into such an ordered sequence as to allow a numeric control (11) to interpret them and consequently move a tool, said file being written into one of the formats that are commonly interpreted by numeric controls (11).

15. Apparatus (1, 11) according to Claim 7, **characterized in that** all said means (1, 11) for reading a mathematical description, optionally computing a model, preparing a working area, defining working parameters and creating paths translate and express their own control data into a plurality of parameters with related values adapted to be modified by an end user.

16. Apparatus (1, 11) according to any of Claims 7 to 15, **characterized in that** the end user is a workshop operator responsible for the workings on numerically controlled machine tools and the operator is a CAM operator.

## Patentansprüche

1. Vorgehensweise für die Erzeugung von Arbeitsbefehlsequenzen für Werkzeugmaschinen mit numerischer Kontrolle, wobei dieser Vorgang folgende Phasen einschließt:
- Ablesung einer mathematischen Beschreibung eines zu bearbeitenden Teils;
- Vorbereitung eines Arbeitsbereichs für dieses Teil auf Grund eines vorgegebenen, mathematischen Modells;
- Festlegung der Bearbeitungsparameter auf Grund des zu bearbeitenden Teils und des vorbereiteten Arbeitsbereichs;
- Erzeugung von Bearbeitungspfaden auf Grund des besagten, vorbereiteten Arbeitsbereiches und der besagten Bearbeitungsparameter, die vom Techniker erschaffen oder durch den Endverbraucher verändert wurden und
- Benutzung der Werkzeugmaschinenkontrolle für Steuerung der Werkzeugmaschine laut den Bearbeitungspfaden, die vom Techniker geschaffen oder vom Endverbraucher verändert wurden,
und durch die Tatsache charakterisiert ist, dass die besagte Festlegungsphase folgende Phasen einschließt:
• Eingabe der Bearbeitungsdaten und technologischen Daten für das anzufertigende Teil durch einen Bediener;
• Übersetzung dieser Bearbeitungsdaten und technologischen Daten in eine Vielzahl von technologischen Parametern mit betreffenden Werten, wobei diese Parameter alles technologische Bearbeitungsparameter des CN sind, diesen Parameter Werte beigeordnet sind, da sie in einer Datei gespeichert sind, und die besagten Werte der besagten Parameter durch den Endverbraucher verändert werden können;
und weiterhin dadurch charakterisiert ist, dass sie nach der besagten Festlegungsphase eine weitere eventuelle Veränderungsphase - je nach Anforderungen der Bearbeitung und mit Ausführung durch den Endverbraucher - der besagten Parameterdatei mit allen für die mit CN-Standard ausgeführten Bearbeitungsprogramme beigeordneten Werten enthält, die schrittweise für jede Bearbeitungsstufe von der Werkzeugmaschine ausgeführt wird.

2. Vorgehensweise gemäß der Beanspruchung 1, **gekennzeichnet durch** die Tatsache, dass sie nach der Ablesephase die Berechnungsphase eines mathematischen Modells des besagten Gegenstandes auf Grund der Ablesedaten der mathematischen Beschreibung umfasst, wobei die besagte Vorbereitungsphase zur Arbeitsbereichvorbereitungsphase für das Teil aus. dem berechneten mathematischen Modell wird.

3. Vorgehensweise gemäß der Beanspruchung 1 oder 2, **gekennzeichnet durch** die Tatsache, dass die Datei der Parameter und Werte auf dem Bildschirm in Form eines veränderlichen Fensters erscheint.

4. Vorgehensweise gemäß der Beanspruchung 3, **gekennzeichnet durch** die Tatsache, dass die Parameter und Werte auf dem Bildschirm in Form eines Programmes erscheinen, das verändert werden kann.

5. Vorgehensweise gemäß der Beanspruchung 1 oder 2, **gekennzeichnet durch** die Tatsache, dass alle besagten Ablesphasen der mathematischen Beschreibung, die eventuelle Berechnung eines Modells, die Vorbereitung des Arbeitsbereichs, die Festlegung der Bearbeitungsparameter und die Erzeugung der Pfade in eine Vielzahl von Parametern mit betreffenden Werten übersetzt bzw. ausgedrückt werden können, die vom Endverbraucher verändert werden können.

6. Vorgehensweise gemäß einer beliebigen der vorhergehenden Beanspruchungen, **gekennzeichnet durch** die Tatsache, dass der Endverbraucher ein mit der Bearbeitung auf Werkzeugmaschinen mit numerischer Kontrolle beauftragter Werkstattarbeiter ist und dass der Bediener ein CAM-Techniker ist.

7. Gerät (1, 11) für die Erzeugung einer Arbeitsbefehlsequenz für Werkzeugmaschinen mit numerischer Kontrolle (13), das folgendes einschließt:
- Mittel (1) für die Ablesung der mathematischen Beschreibung eines zu bearbeitenden Teils;
- zusätzliche Mittel für die Berechnung eines mathematischen Modells des besagten Teils auf Grund der Ablesung der mathematischen Beschreibung durch die besagten Mittel (1);
- Mittel (1) für die Vorbereitung eines Arbeitsbereichs für das besagte Teil aus dem vorgegebenen, mathematischen Modell;
- Mittel (1) für die Festlegung der Bearbeitungsparameter auf Grund des zu bearbeitenden Teils und des vorbereiteten Arbeitsbereiches;
- Mittel (11) für die Erzeugung von Bearbeitungspfaden auf Grund des besagten, vorbereiteten Arbeitsbereich und der besagten Bearbeitungsparameter, die vom Techniker erzeugt oder vom Endverbraucher verändert wurden, und
- eine Werkzeugmaschinenkontrolle (11) für Steuerung der Werkzeugmaschine (13) zufolge der vom Techniker erzeugten oder durch den Endverbraucher veränderten Bearbeitungspfaden;
**gekennzeichnet durch** die Tatsache, dass die besagten Definitionsmittel (1) noch folgendes enthalten:
• Mittel (1) für die Eingabe der Bearbeitungsdaten und technologischen Daten für das zu bearbeitende Teil **durch** den Bediener;
• Mittel (1) für die Übersetzung der Bearbeitungsdaten und technologischen Daten in eine Vielzahl von technologischen Parametern mit den betreffenden Werten, wobei alles technologische CN-Bearbeitungsparameter sind und diese Parameter mit beigeordneten Werten in einer Datei gespeichert sind und die besagten Werte der besagten Parameter **durch** den Endverbraucher verändert werden können;
und **gekennzeichnet durch** die Tatsache, dass noch weiterhin Mittel (11) für die eventuelle Veränderung dieser Dateien mit Parametern und beigeordneten Werten für alle standardmäßigen CN Bearbeitungsprogramme, je nach Anforderungen der Bearbeitung und **durch** Ausführung **durch** den Endverbraucher, eingeschlossen sind, wobei diese Veränderungsmittel (11) stufenweise für jedes Bearbeitungsstadion der besagten Werkzeugmaschine aktiviert werden können.

8. Gerät (1, 11) laut Beanspruchung 7, **gekennzeichnet durch** die Tatsache, dass die besagte Datei mit Parametern und Werten auf einem Bildschirm in Form eines veränderlichen Fensters erscheint.

9. Gerät (1, 11) laut Beanspruchung 7, **gekennzeichnet durch** die Tatsache, dass die besagte Datei mit Parametern und Werten auf einem Bildschirm in Form eines veränderlichen Programms erscheint.

10. Gerät (1, 11) laut Beanspruchung 7, **gekennzeichnet durch** die Tatsache, dass die besagten Mittel (1) für die Ablesung der mathematischen Beschreibung eines zu bearbeitenden Teils eine Datei enthalten, die in einem Format für die Beschreibung von mathematischen Flächen wie IGES oder VDA abgefasst ist.

11. Gerät (1, 11) laut Beanspruchung 7, **gekennzeichnet durch** die Tatsache, dass besagte Mittel (1) für die Berechnung des mathematischen Modells des betreffenden Teils allgemeine Algorithmen enthalten, die in der Lage sind, mathematische Flächen ungefähr mit gleichwertigen geometrischen Darstellungen anzugeben.

12. Gerät (1, 11) laut Beanspruchung 7, **gekennzeichnet durch** die Tatsache, dass die besagten Mittel (1) für die Vorbereitung des Arbeitsbereichs für das besagte Teil des berechneten mathematischen Modells allgemeine Algorithmen für die Verwaltung der Schnittstelle gegenüber dem Bediener enthalten, die in der Lage sind, die Definition der Bereiche selbst **durch** Punktvorrichtungen oder Eingabe der Parameter und der betreffenden Werte, die sie beschreiben, **durch** die Tastatur zu ermöglichen.

13. Gerät (1, 11) laut Beanspruchung 7, **gekennzeichnet durch** die Tatsache, dass die besagten Mittel (1) für die Festlegung der Bearbeitungsparameter auf Grund des zu bearbeitenden Teils spezifische Algorithmen einschliessen, die eine Vielzahl von Parametern und ihre betreffende Werte, die vom Bediener für die betreffende Bearbeitung bestimmt wurden, in einer Textdatei speichern.

14. Gerät (1, 11) laut Beanspruchung 7, **gekennzeichnet durch** die Tatsache, dass die besagten Mittel (11) für die Erzeugung von Bearbeitungspfaden Algorithmen einschliessen, die in der Lage sind, eine Datei mit einer Vielzahl von Parametern und ihren betreffenden Werten in einer geordneten Sequenz abzufassen, um einer numerischen Kontrolle (11) ihre Verwertung und die daraus folgende Bewegung des Werkzeugs zu ermöglichen, da diese Datei in einem der normalerweise von der numerischen Kontrolle (11) ausgewerteten Format abgefasst ist

15. Gerät (1, 11) laut Beanspruchung 7, **gekennzeichnet durch** die Tatsache, dass alle besagten Mittel (1, 11) für die Ablesung der mathematischen Beschreibung, eventuelle Berechnung eines Modells, Vorbereitung eines Arbeitsbereichs, Festlegung der Bearbeitungsparameter und Pfaderzeugung die eigenen Kontrolldaten mit einer Vielzahl von Parametern mit den betreffenden Werten übersetzen bzw. ausdrücken, die vom Endverbraucher verändert werden können.

16. Gerät (1, 11) laut Beanspruchungen 7 bis 15, **gekennzeichnet durch** die Tatsache, dass der Endverbraucher ein Werkstattarbeiter ist, der mit der Bearbeitung auf Werkzeugmaschinen mit numerischer Kontrolle betraut ist und dass der Arbeiter ein CAM-Techniker ist.

## Revendications

1. Méthode pour la création de séquences de directives d'usinage pour machines outils à commande numérique, ladite méthode comprenant les phases de:
- lecture d'une description mathématique d'un objet à usiner;
- préparation d'une zone de travail pour ledit objet à partir d'un modèle mathématique prédéfini;
- définition des paramètres d'usinage en fonction de l'objet à usiner et de la zone de travail préparée;
- création de parcours d'usinage sur la base de ladite zone de travail préparée et desdits paramètres d'usinage qui ont été créés par l'opérateur ou modifiés par l'utilisateur final; et
- utilisation du contrôle de la machine-outil pour commander la machine outil suivant des parcours d'usinage créés par l'opérateur ou modifiés par l'utilisateur final;
**caractérisée en ce que** ladite phase de définition comprend les phases de:
• introduction par un opérateur, des données d'usinage et de données technologiques relatives à l'objet à réaliser;
• traduction de ces données d'usinage et données technologiques en une pluralité de paramètres technologiques avec valeurs correspondantes, lesdits paramètres étant tous les paramètres de travail technologique du CN, lesdits paramètres avec valeurs liées étant mémorisés dans un fichier, les valeurs desdits paramètres étant susceptibles d'être modifiées par un utilisateur final;
et **caractérisée en ce qu'**elle comprend, après ladite phase de définition, une ultérieure phase de modification éventuelle, suivant les nécessités d'usinage et à travers l'interaction de l'utilisateur final, dudit fichier de paramètres avec valeurs liées pour tous les programmes de travail à CN standard, ladite phase de modification éventuelle étant effectuée pas à pas pour chaque étape de travail de ladite machine-outil.

2. Méthode suivant la revendication 1, **caractérisée en ce qu'**elle comprend en outre, après la phase de lecture, la phase de calcul d'un modèle mathématique dudit objet basé sur les données obtenues de ladite phase de lecture de la description mathématique, la phase de préparation devenant ainsi la phase de préparation d'une zone de travail pour ledit objet sur le modèle mathématique calculé.

3. Méthode suivant la revendication 1 ou 2, **caractérisée en ce que** ledit fichier de paramètres et valeurs est affiché sur un écran sous la forme de fenêtres modifiables.

4. Méthode suivant la revendication 3, **caractérisée en ce que** ledit fichier de paramètres et valeurs est affiché sur un écran sous la forme d'un programme susceptible d'être modifié.

5. Méthode suivant la revendication 1 ou 2, **caractérisée en ce que** toutes les phases de lecture d'une description mathématique, le calcul éventuel d'un modèle, la préparation d'une zone de travail, la définition des paramètres d'usinage et la création des parcours sont capables d'être exprimés en une pluralité de paramètres avec valeurs correspondantes pouvant être modifiés par l'utilisateur final.

6. Méthode suivant une quelconque des revendications précédentes, **caractérisée en ce que** l'utilisateur final est un opérateur d'atelier employé à l'usinage sur machines-outils à commande numérique et l'opérateur est un opérateur CAM.

7. Appareil (1, 11) pour la création de séquences de directives d'usinage pour machines outils à commande numérique (13), appelé appareil et comprenant:
- des moyens (1) pour lire une description mathématique d'un objet à usiner;
- des moyens optionnels pour calculer un modèle mathématique dudit objet en se basant sur les données obtenues desdits moyens (1) pour lire une description mathématique;
- des moyens (1) pour préparer un zone de travail pour ledit objet du modèle mathématique prédéfini;
- des moyens (1) pour définir les paramètres d'usinage en fonction de l'objet à usiner et à la zone de travail préparée;
- des moyens (11) pour créer des parcours d'usinage en fonction de ladite zone de travail préparée et desdits paramètres d'usinage qui ont été créés par l'opérateur ou modifiés par l'utilisateur final; et
- un contrôle de machine-outil (11) pour commander la machine-outil (13) suivant les parcours d'usinage créés par l'opérateur ou modifiés par l'utilisateur final;
**caractérisé en ce que** lesdits moyens de définition (1) comprennent aussi:
• des moyens (1) pour l'introduction des données d'usinage par un opérateur et des données technologiques relatives à l'objet à réaliser;
• des moyens pour traduire (1) lesdites données d'usinage et les données technologiques en une pluralité de paramètres avec valeurs correspondantes, lesdits paramètres étant tous les paramètres de travail technologiques du CN, lesdits paramètres avec valeurs liées étant mémorisés dans un fichier, les valeurs desdits paramètres pouvant être modifiées par l'utilisateur final;
et **caractérisé en ce qu'**il comprend aussi des moyens (11) pour modifier éventuellement, suivant les nécessités d'usinage et à travers l'interaction de l'utilisateur final, ledit fichier des paramètres avec valeurs liées pour tous les programmes de travail à CN standard, lesdits moyens de modification (11) étant activés pas à pas pour chaque étape d'usinage de ladite machine-outil.

8. Appareil (1, 11) suivant la revendication 7, **caractérisé en ce que** ledit fichier des paramètres et de valeurs est affiché sur un écran sous forme de fenêtres modifiables.

9. Appareil (1, 11) suivant la revendication 7, **caractérisé en ce que** ledit fichier des paramètres et de valeurs est affiché sur un écran sous la forme d'un programme susceptible d'être modifié.

10. Appareil (1, 11) suivant la revendication 7, **caractérisé en ce que** lesdits moyens (1) pour la lecture d'une description mathématique d'un objet à usiner comprennent un fichier écrit en suivant un des formats pour la description de surfaces mathématiques, comme IGES ou VDA.

11. Appareil (1, 11) suivant la revendication 7, **caractérisé en ce que** lesdits moyens (1) pour le calcul du modèle mathématique dudit objet comprennent des algorithmes du type général en mesure de se rapprocher au plus près des surfaces mathématiques avec des représentations géométriques équivalentes.

12. Appareil (1, 11) suivant la revendication 7, **caractérisé en ce que** lesdits moyens (1) pour la préparation de la zone de travail pour l'objet dudit modèle mathématique calculé comprennent des algorithmes du type général pour la gestion de l'interface vers l'opérateur en mesure de permettre la définition de ces mêmes zones au moyen de dispositifs de pointage ou par l'introduction au clavier des paramètres et des valeurs correspondantes capables de la décrire.

13. Appareil (1, 11) suivant la revendication 7, **caractérisé en ce que** lesdits moyens (1) pour la définition des paramètres d'usinage en fonction de l'objet à travailler comprennent des algorithmes spécifiques en mesure de mémoriser dans un fichier de texte une pluralité de paramètres et leurs valeurs correspondantes définis par l'opérateur pour l'usinage en question.

14. Appareil (1, 11) suivant la revendication 7, **caractérisé en ce que** lesdits moyens (11) pour la création de parcours d'usinage comprennent des algorithmes en mesure d'écrire un fichier contenant une pluralité de paramètres et leurs valeurs correspondantes dans une séquence ordonnée afin qu'une commande numérique (11) puisse les interpréter et transmettre le mouvement conséquent à l'outil, ce fichier étant écrit dans un des formats communément interprétés par les commandes numériques (11).

15. Appareil (1, 11) suivant la revendication 7, **caractérisé en ce que** tous les moyens (1, 11) pour : lecture d'une description mathématique, éventuel calcul d'un modèle, préparation de la zone de travail, définition des paramètres d'usinage et création des parcours, traduisent et expriment leurs propres données de contrôle en une pluralité de paramètres avec valeurs correspondantes susceptibles d'être modifiés par l'utilisateur final.

16. Appareil (1, 11) suivant une quelconque des revendications de 7 à 15, **caractérisé en ce que** l'utilisateur final est un opérateur d'atelier employé à l'usinage de pièces sur machines-outils à commande numérique et que l'opérateur est un opérateur CAM.
